Europäisches Patentamt

European Patent Office

Office européen des brevets

(11) Veröffentlichungsnummer: **0 510 417 A1**

## (12) EUROPÄISCHE PATENTANMELDUNG

(21) Anmeldenummer: **92105881.4**

(22) Anmeldetag: **06.04.92**

(51) Int. Cl.⁵: **F16F 9/04**

(30) Priorität: **11.04.91 DE 4111814**

(43) Veröffentlichungstag der Anmeldung:
**28.10.92 Patentblatt 92/44**

(84) Benannte Vertragsstaaten:
**AT BE CH DE ES FR GB IT LI NL SE**

(71) Anmelder: **Continental Aktiengesellschaft**
**Königsworther Platz 1, Postfach 1 69**
**W-3000 Hannover 1(DE)**

(72) Erfinder: **Keller, Michael, Dr.**
**Manteufelstrasse 5**
**W-3000 Hannover 1(DE)**
Erfinder: **Schreck, Klaus**
**Halkettstrasse 38**
**W-3000 Hannover 1(DE)**

(54) **Luftfederbalg mit einer flexiblen Balgwand aus elastomerem Werkstoff.**

(57) Ein Luftfederbalg mit einer flexiblen Balgwand aus elastomerem Werkstoff weist an seinen beiden offenen Enden jeweils einen einvulkanisierten Kernring aufweisende Dichtwülste auf. Die Balgwand besteht aus einer weitgehend gasundurchlässigen Innengummischicht (4,14) und einer witterungsbeständigen Außengummischicht (3,11), zwischen denen ein Festigkeitsträger (5,6) eingebettet ist. Um die Lebensdauer eines derartigen Luftfederbalges zu erhöhen, besteht die Innengummischicht (4,14) im wesentlichen aus Butylgummi.

FIG. 1

EP 0 510 417 A1

Die Erfindung betrifft einen Luftfederbalg mit einer flexiblen Balgwand aus elastomerem Werkstoff gemäß dem Oberbegriff des Patentanspruchs 1.

Luftfedern mit einem Balg aus elastomerem Werkstoff bewähren sich seit Jahrzehnten als lastregelbare Federelemente im Fahrzeugbau. Für Nutzfahrzeuge werden zwei grundsätzliche Luftfedertypen unterschieden, nämlich Rollbälge und Faltenbälge. Die Balgwand dieser Luftfederbälge besteht aus einer äußeren und einer inneren Gummideckschicht, zwischen denen ein Festigkeitsträger eingebettet ist.

Die innere Gummideckschicht ist zur Aufrechterhaltung des Innendruckes besonders luftdicht ausgebildet. Die äußere Gummideckschicht dient als Schutz des Festigkeitsträgers gegenüber Witterungseinflüssen, aggressiven Medien und mechanischen Beschädigungen.

Die Luftfederbälge sind an den beiden offenen Enden mittels Befestigungsteilen abgedichtet, über die sie am Fahrzeug befestigt werden. Im Hinblick auf die Anordnung an den Befestigungsteilen werden Luftfederbälge mit Dichtwülsten und wulstfreie Luftfederbälge unterschieden. Die wulstfreien Luftfederbälge, z.B. Schlauchrollbälge, werden besonders im Pkw-Bereich eingesetzt, weil dort eine hohe Biegewechselbeständigkeit gefordert wird. Im Nutzfahrzeugbau werden überwiegend Luftfederbälge mit Dichtwülsten eingesetzt.

Am Markt durchgesetzt haben sich Luftfederbälge aus Polychloropren (CR) mit seinem ausgewogenen Eigenschaftsbild.

Die bekannten Luftfederbälge haben sich hinlänglich bewährt. Dennoch erhöhen sich beständig die Anforderungen an die Eigenschaften und Lebensdauer der Luftfederbälge, da z.B. die Fahrzeughersteller die dynamische Belastung der Luftfederbälge durch Anhebung der Betriebsdrücke ständig erhöhen. Diese Forderung gilt für Nutzfahrzeuge sowie für Personenkraftfahrzeuge. Die seit einiger Zeit eingesetzten Schlauchrollbälge haben die Lebensdauer der Luftfederbälge beträchtlich erhöht. Es fiel auf, daß sich die Lebensdauer der Luftfederbälge mit Dichtwülsten nicht in einem ähnlichen Maße steigern ließ.

Der Erfindung liegt die Aufgabe zugrunde, einen Luftfederbalg der eingangs geschilderten Art zu schaffen, der sich durch eine erhöhte Lebensdauer auszeichnet.

Die Aufgabe wird erfindungsgemäß dadurch gelöst, daß die Innengummischicht aus Butylgummi besteht.

Es wurde überraschend festgestellt, daß bei der bisher nicht bekannten Verwendung von Butylgummi als Werkstoff für die Innengummischicht die Lebensdauer des Luftfederbalges bei erhöhten Betriebsdrücken wesentlich verbessert wird. Butylkautschukvulkanisate zeichnen sich durch eine sehr geringe Gasdurchlässigkeit aus. Es wird daher vermutet, daß das Diffundieren von Luft durch die Innengummischicht in den Festigkeitsträger wesentlich verringert wird. Dieser durchdiffundierten Luft wird eine nachteilige Wirkung auf die Lebensdauer des Luftfederbalges nachgesagt, wobei vermutet wird, daß sich die Druckluft im Gewebe des Festigkeitsträgers anlagert und dort abgebaut werden muß. Der größte Anteil des Druckabbaues wird nun in der als Diffusionssperre dienenden inneren Gummideckschicht ablaufen. Dadurch wird eine Entlastung des Festigkeitsträgers von diffundierter Druckluft erreicht.

Im Gegensatz zu Schlauchrollbälgen, deren offene Enden in der Einspannstelle den Festigkeitsträger in der Stirnseite frei liegen lassen, ist diese dort mögliche Druckluftabfuhr über das offenliegende Festigkeitsträgergewebe bei Luftfederbälgen mit Dichtwülsten nicht möglich. Der Festigkeitsträger ist innerhalb der Dichtwülste um einen Kern geschlungen und liegt mit seinem Ende im elastomeren umgebenden Werkstoff. Die sich im Festigkeitsträger langsam ansammelnde Druckluft kann bei Luftfederbälgen mit Dichtwülsten nicht abgeführt werden. Sie muß sich über die Außengummischicht langsam abbauen.

Durch die Erfindung wird eine Schonung des Festigkeitsträgers erreicht, wodurch eine beträchtliche Lebensdauererhöhung erzielt wird. Diese Lebensdauerhöhung macht sich besonders bei erhöhten Betriebsdrücken vorteilhaft bemerkbar.

In vorteilhafter Ausgestaltung der Erfindung besteht die Innengummischicht aus Butylgummi und die Außengummischicht aus einem Mischvulkanisat aus Naturkautschuk und Butadienkautschuk. Da die Gasdurchlässigkeit von NR/BR hoch ist, wird die in geringerem Maße in die Festigkeitsträgerschichten eindringende Luft schnell abgeführt.

In weiterer vorteilhafter Ausgestaltung der Erfindung besteht die Außengummischicht aus Polychloropren-Kautschukvulkanisat, das gasdurchlässig ausgebildet ist.

Durch die vorteilhafte Ausgestaltung der Erfindung gemäß dem Kennzeichen des Anspruchs 4 lassen sich die Gewebelagen des Festigkeitsträgers untereinander und mit den Deckschichten der Luftfeder durch die Vulkanisation gut zu einem Ganzen verbinden.

Eine weitere vorteilhafte Ausgestaltung der Erfindung wird im Anspruch 5 offenbart.

Durch die Ausgestaltung gemäß dem Kennzeichen im Anspruch 6 wird die Verbindung des Butylinnengummis mit den Festigkeitsträgern erhöht.

Anhand der Zeichnung werden nachstehend zwei Ausführungsbeispiele der Erfindung näher erläutert. Es zeigt

Fig. 1    im Ausschnitt einen Längsschnitt durch die Balgwand eines Luftfederbalges, wobei der Verlauf des Druckgradienten durch die Balgwand angedeutet ist;

Fig. 2    einen Schnitt durch die Balgwand eines Luftfederbalges, dessen Innengummischicht aus zwei miteinander
dublierten Schichten hergestellt ist.

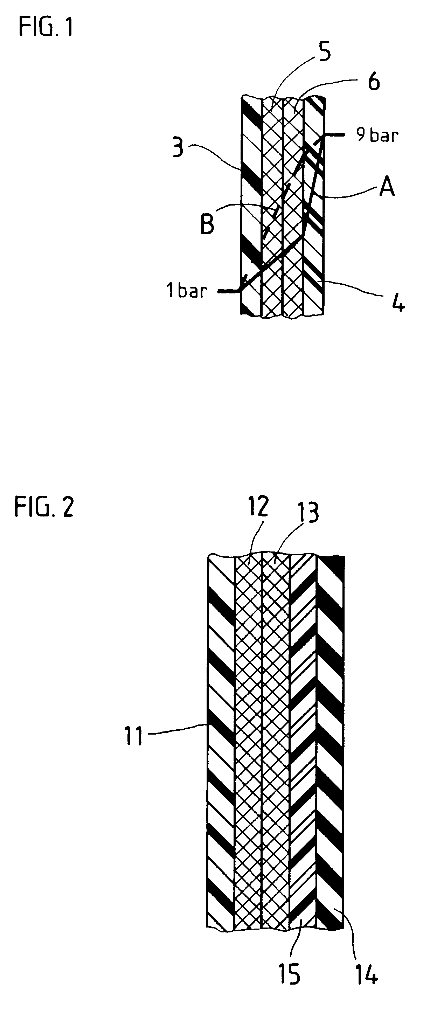

Die in Fig. 1 gezeigte Balgwand weist eine Außengummischicht 3 aus einem NR/BR-Vulkanisat auf. Dabei steht 'NR' für Natural Rubber und 'BR' für Butadiene Rubber. Die Innengummischicht 4 besteht aus einem Butylvulkanisat, das sich durch eine hohe Gasdichtheit auszeichnet. Zwischen den beiden Gummideckschichten 3 und 4 ist ein Festigkeitsträger aus zwei gummierten Nyloncordgewebebahnen 5 und 6 eingebettet. Die Gewebebahnen 5 und 6 sind mit einer Kautschukmischungsschicht aus NR/BR-Kautschuk gummiert.

Der über die Balgwand verlaufende Druckabbau ist in der Kurve A angedeutet. Wie aus dem Verlauf des Druckabbaus ersichtlich wird, ist der größte Druckabbau innerhalb der Innengummischicht 4, während der Abbau bis zur äußeren Atmosphäre über die Festigkeitsträger 5, 6 und die Außengummischicht 3 flacher verläuft. Zum Vergleich dazu ist der Druckabbau bei einem Luftfederbalg nach dem Stand der Technik mit Innen- und Außengummischicht aus Polychloroprenvulkanisat in der gestrichelten Linie B angedeutet. Der Druckgradient verläuft nahezu linear durch die Balgwand. Dieses bedeutet eine erheblich größere Druckbelastung des Festigkeitsträgers 5, 6.

Die in Fig. 2 dargestellte Balgwand weist eine äußere Gummideckschicht 11 aus Polychloropren (CR) auf. Die beiden Nyloncordgewebelagen 12 und 13 sind mit einer Kautschukmischung aus NR/BR gummiert. Die innere Gummideckschicht 14 besteht aus Butylkautschuk. Zwischen der Innengummischicht 14 und dem Festigkeitsträger 12, 13 ist eine mit der Innengummischicht 14 dublierte Gummischicht 15 aus NR/BR-Vulkanisat angeordnet. Die Verbindung des Innengummis 14 mit den Festigkeitsträgern 12, 13 wird dadurch erhöht.

**Patentansprüche**

1.  Luftfederbalg mit einer flexiblen Balgwand aus elastomerem Werkstoff und an den beiden offenen Enden des Luftfederbalges angeordneten, einen einvulkanisierten Kernring aufweisende, konische oder verspannbare Dichtwülste, wobei die Balgwand eine weitgehend gasundurchlässige Innengummischicht und eine witterungsbeständige Außengummischicht aufweist, zwischen denen ein Festigkeitsträger eingebettet ist, **dadurch gekennzeichnet,**
    daß die Innengummischicht (4; 14) im wesentlichen aus Butylgummi besteht.

2.  Luftfederbalg nach Anspruch 1, dadurch gekennzeichnet, daß die Innengummischicht (4) aus Butylgummi und die Außengummischicht (3) aus einer Gummischicht von NR- und BR-Kautschuk besteht.

3.  Luftfederbalg nach Anspruch 1, dadurch gekennzeichnet, daß die Innengummischicht (4) aus Butylgummi und die Außengummischicht (3) aus Polychloroprenvulkanisat besteht, das gasdurchlässig ausgebildet ist.

4.  Luftfederbalg nach einem der Ansprüche 1 bis 3, dadurch gekennzeichnet, daß der Festigkeitsträger (5, 6) mit Butylkautschuk beschichtet ist.

5.  Luftfederbalg nach Anspruch 4, dadurch gekennzeichnet, daß der Festigkeitsträger (5, 6) aus zwei gekreuzt angeordneten Nyloncord-Gewebelagen besteht.

6.  Luftfederbalg nach einem der Ansprüche 1 bis 5, dadurch gekennzeichnet, daß zwischen der Innengummischicht (14) und dem Festigkeitsträger (12, 13) eine mit der Innengummischicht (14) dublierte Gummischicht (15) aus NR/BR-Vulkanisat angeordnet ist.

FIG. 1

5
6
9 bar
3
A
B
1 bar
4

FIG. 2

12
13
11
15
14

Europäisches
Patentamt

**EUROPÄISCHER RECHERCHENBERICHT**

Nummer der Anmeldung

| EINSCHLÄGIGE DOKUMENTE | | | EP 92105881.4 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl⁵)** |
| X | GB - A - 1 418 998<br>(THE YOKOHAMA RUBBER CO. LTD.)<br>\* Seite 2, Zeilen 10-29;<br>Fig. 3 \*<br>-- | 1,2,5 | F 16 F 9/04 |
| A | GB - A - 2 046 872<br>(CONTINENTAL GUMMI-WERKE)<br>\* Fig. 1,2 \*<br>---- | | |

| | | **RECHERCHIERTE SACHGEBIETE (Int. Cl⁵)** |
|---|---|---|
| | | F 16 F 9/00 |

Der vorliegende Recherchenbericht wurde für alle Patentansprüche erstellt.

| **Recherchenort** | **Abschlußdatum der Recherche** | **Prüfer** |
|---|---|---|
| WIEN | 05-08-1992 | PIRKER |